# EUROPEAN PATENT SPECIFICATION

(11) **EP 1 416 720 B1**
(45) Date of publication and mention of the grant of the patent: **09.05.2012**
(21) Application number: 02425655.4
(22) Date of filing: 29.10.2002
(51) Int. Cl.: H04N 1/64

(54) **A process and system for processing signals arranged in a Bayer pattern**
Verfahren und Vorrichtung zur Verarbeitung von Signalen, die in einem Bayer-Format vorliegen
Procédé et système de traitement des signaux arrangés en format Bayer

(43) Date of publication of application: 06.05.2004
(73) Proprietor: STMicroelectronics Srl, 20864 Agrate Brianza (IT)
(72) Inventor: Pappalardo, Francesco, 95047 Paternò (Catania) (IT); Capra, Alessandro, 95030 Gravina di Catania (Catania) (IT); Mancuso, Massimo, 20052 Monza (Milano) (IT); Broquin, Hervé, 35510 Cesson-Sévigné (FR); Foderà, Paolo Antonino, 91025 Marsala (Trapani) (IT); Salurso, Elena, 84043 Agropoli (Salerno) (IT)
(74) Representative: Bosotti, Luciano

(56) References cited:
- EP-A- 1 150 467
- US-A- 5 528 292
- CHILDERS B R ET AL: "Reordering memory bus transactions for reduced power consumption" , LANGUAGES, COMPILERS, AND TOOLS FOR EMBEDDED SYSTEMS. ACM SIGPLAN WORKSHOP LCTES 2000. PROCEEDINGS (LECTURE NOTES IN COMPUTER SCIENCE VOL.1985), LANGUAGES, COMPILERS, AND TOOLS FOR EMBEDDED SYSTEMS. ACM SIGPLAN WORKSHOP LCTES 2000. PROCEEDINGS, VANCO , 2001, BERLIN, GERMANY, SPRINGER-VERLAG, GERMANY, PAGE(S) 146 - 161 XP002238671 ISBN: 3-540-41781-8 * the whole document *
- BENINI L ET AL: "System-level power optimization of special purpose applications: the Beach Solution" , PROCEEDINGS 1997 INTERNATIONAL SYMPOSIUM ON LOW POWER ELECTRONICS AND DESIGN (IEEE CAT. NO.97TH8332), PROCEEDINGS OF 1997 INTERNATIONAL SYMPOSIUM ON LOW POWER ELECTRONICS AND DESIGN, MONTEREY, CA, USA, 18-20 AUG. 1997 , 1997, NEW YORK, NY, USA, ACM, USA, PAGE(S) 24 - 29 XP002238670 ISBN: 0-89791-903-3 * the whole document *
- STAN M R ET AL: "BUS-INVERT CODING FOR LOW-POWER I/O" IEEE TRANSACTIONS ON VERY LARGE SCALE INTEGRATION (VLSI) SYSTEMS, IEEE INC. NEW YORK, US, vol. 3, no. 1, 1 March 1995 (1995-03-01), pages 49-58, XP000500301 ISSN: 1063-8210

## Description

### Field of invention

The invention refers to a technique used for the reduction of bus transitions, or rather for the reduction of what is currently known as switching activity (SA).

The invention has been developed with particular attention to the possible application in the transmission of signals in the Bayer format.

### Description of known art

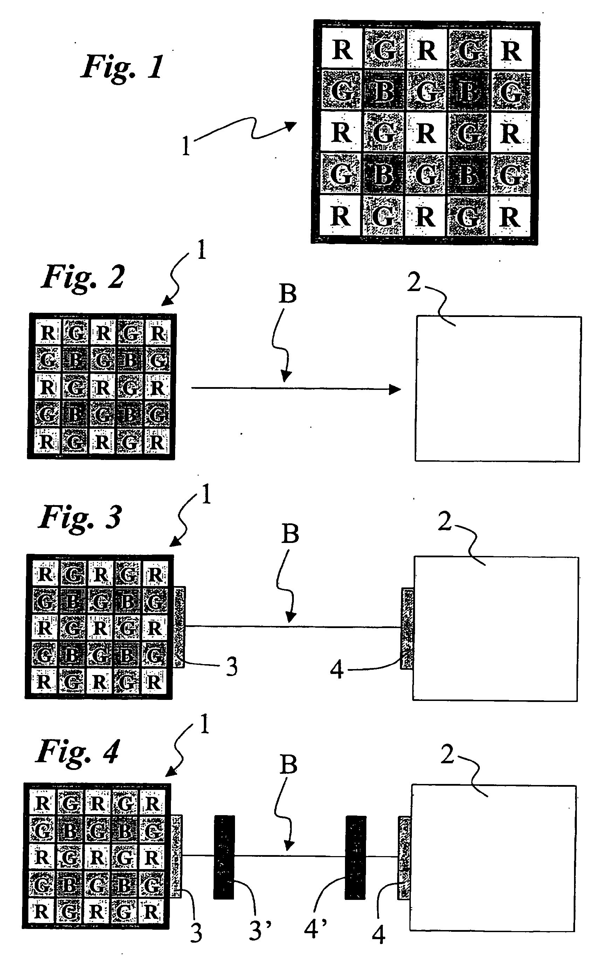

Digital signals in the Bayer format, such as those provided by an image sensor, equipping a camera for example, have the format shown in Figure 1. Basically, a matrix format is being dealt with in which each row is alternatively coded with two colours: odd rows are alternatively coded with the red and green colours, while even rows are alternatively coded with the green and blue colours.

Naturally, in the layout shown in Figure 1, the letters R, G and B stand for Red, Green and Blue respectively.

When an image sensor, such as that schematically indicated as reference 1 in Figure 2, must be connected to a processor 2 destined to process the pixel data to reconstruct the image, a problem arises due to the fact that data items in the Bayer format are highly uncorrelated with each other. During transmission on the bus B normally adopted for transmission to the processor 2 (please see the layout in Figure 2) the data in question gives rise to quite high switching activity.

Document US 4, 630, 307 discloses an image sensor device reflecting the arrangement just described with reference to Figure 1 and Figure 2.

The problem can be faced, at least in principle, by applying data encoding techniques on the bus B aimed
At reducing switching activity. For example, on small-size buses, such as those up to 8 bits, the technique known as bus inverter (BI) is found to be the best encoding technique for the majority of cases. The results deriving from the application of this technique can vary, and in quite a significant manner, depending on the type of data being transmitted.

The U.S. patent US-A-5 528 292 discloses an electronic still camera that includes a plurality of pickup elements for a plurality of colors. A color separation circuit is there provided that, starting from the Bayer format matrix, produces three matrixes each containing only the R or G or B values. These three R, G, B matrixes then separately undergo a respective interpolation process and a DCT compression with Huffman coding. Finally the transformed coefficients for each color are serially sent to a memory device.

The scientific publication by Childers et al. "Reordering Memory Bus Transactions for Reduced Power consumption", Language, Compilers and Tools for Embedded Systems. ACM SIGPLAN Workshop LCTES 2000, Proceedings, Vanco 2001, Berlin, Germany, Springer-Verlag, Germany, pages 146-161, mentions a reordering of bus memory transactions to achieve a reduced switching activity on the bus.

The publication scientific by Benini et al. "System-Level Power Optimization of Special Purpose Applications: The Beach Solution", Proceedings 1997 International Symposium on Low Power Electronics and Design, Monterey, CA, USA, 18-20 Aug. 1997, 1997, New York, NY, USA, ACM, USA, pages 24-29, discloses a bus encoding technique based on a block-wise coding or reordering of addresses for power optimization of digital systems containing a processor executing special-purpose routines. The address stream is first analyzed in order to measure correlation between pair of lines, then the bus lines are partitioned in disjoint clusters and finally encoded so as to minimize the transitions.

### Object and summary of the present invention

The present invention sets itself the object of providing a solution capable of constituting the solution of choice for an application context of the type represented in Figure 2.

According to the present invention, this object is achieved thanks to a process having the characteristics specified in the claims that follow. The invention also regards the corresponding device.

Substantially, the invention is based on the idea of performing an ordered encoding of the sequence of Bayer format data in input to the transmission bus. The purpose of this is to reduce the transitions during transmission on the bus, consequently realizing the subsequent reordering of the data into the Bayer format at the output of the transmission bus.

### Brief description of the enclosed drawings

The invention will now be described, purely by way of a non-limitative example, with reference to the enclosed drawings, in which:
- Figures 1 and 2 generically illustrate the application context of the solution according to the invention, as previously described,
- Figure 3 illustrates, in general terms, an architecture for the transmission of Bayer data over a bus operating in accordance with the invention,
- Figure 4 illustrates a possible extension of the solution according to the invention, and
- Figure 5 illustrates the possible embodiment of an encoder operating in accordance with the invention, in the form of a block diagram.

### Detailed description of an example of embodiment of the invention

To focus ideas, without this being interpreted in a limitative sense with regards to the scope of the invention, it is presumed that in an application context such as that represented in Figure 2 (transmission of video data acquired by a sensor 1 in a Bayer format to a processor 2 via a bus B) 640*480 pixels, for example, transit on the connection bus between the sensor 1 and the processor or controller 2 for each image in VGA format.

This communication absorbs a large quantity of power due to the effect of induced transitions on the connection bus B.

To better understand the motives of this situation (liable to arise for any number of bits representing the pixels and for any size of bus), it is presumed to be dealing with pixels whose colour is represented by k bits and that the connection bus B between the sensor 1 and the processor 2 is a k/2 bit bus.

For this system, it is presumed that the sensor has n pixels per row (five pixels in the case of the example illustrated herein), or rather n columns and that there are a total of m rows (in this case totalling five in number).

Each colour is first transmitted with k/2 bits of the upper part (from bit k-1 to bit k/2) and then the k/2 bits of the lower part (from bit [k/2-1] to bit 0) .

The data in output can thus be represented in the following manner: 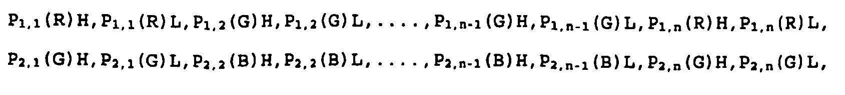 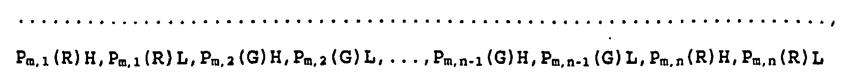 where:

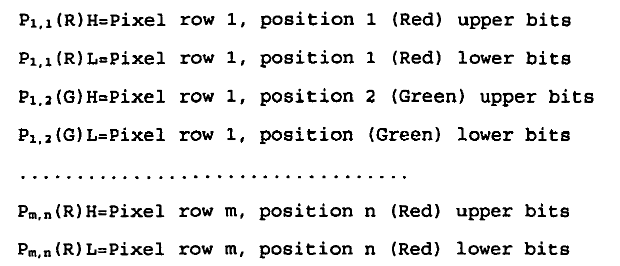

Values in output from the sensor are found to be highly uncorrelated with each other and this reflects in the high switching activity on the bus.

The idea at the base of the invention is therefore that of reorganizing the data, with regards to both the position of upper and the lower bits and the colour represented by the pixels, and consequently transferring the data (always with reference to the above-supplied example) on the basis of the sequence specified below:

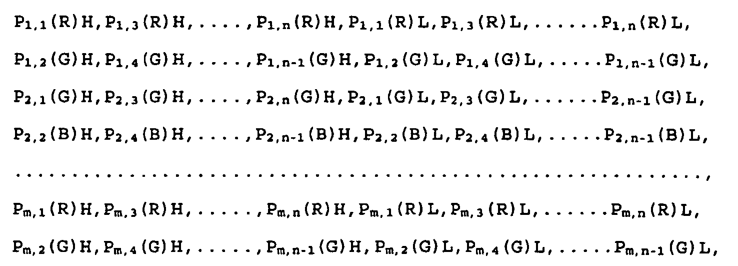

To implement the encoding from the previously seen "classical" format to the "encoded" format shown above, it is sufficient to associate the output of the sensor 2 with an encoder 3 that receives the data in the classical format and transforms it into the encoded format ready for transmission on the bus B.

Symmetrically, a decoder 4 is situated at the input to the processor 2, which receives the data in the encoded format and transforms it back to the classical format for input to the processor 2.

If effect, the encoder 3 reorders the pixels that are ordered in the Bayer format so that pixels of the same colour are grouped together as much as possible.

In fact, comparing the previously illustrated classical data format and the encoded format it is immediately obvious that the first (classical format) has a high recurrence of situations in which the relative colours of adjacent pixels are different. On the contrary, data in the second form (encoded format) is grouped as markedly as possible into a first group or set of pixels relative to a first colour (Red in the illustrated example), followed by a second group or set of pixels of a second colour (Green in the illustrated example) and, lastly, a group or set of pixels relative to the third colour (Blue in the illustrated example). In addition, grouping the upper and lower parts of the data items reduces data variance.

In a possible form of embodiment, the encoder circuit 3, the operation of which is timed by a clock signal CLK, is formed by a series of k-bit registers (typically flip-flops) that contain the pixels of an entire row. In particular, the registers in question are grouped into four blocks for the purposes of containing:
- in the first block, the upper part (H) of the set of pixels in odd positions and which belong to the row being dealt with each time; in the case of the sensor shown in Figures 1 to 4, for example, the upper part of the red pixels for the first row could be handled,
- in the second block, the lower part of the set of pixels in odd positions and which belong to the row being processed each time; in the case of the sensor shown in Figures 1 to 4, for example, the lower part of the red pixels for the first row could be handled,
- in the third block, the upper part of the set of pixels in even positions and which belong to the row being processed each time; in the case of the sensor shown in Figures 1 to 4, for example, the upper part of the green pixels for the first row could be handled, and
- in the fourth block, the lower part of the set of pixels in even positions and which belong to the row being processed each time; in the case of the sensor shown in Figures 1 to 4, for example, the lower part of the green pixels could be handled.

The above-indicated blocks or registers are dimensioned so as to contain all the data items of a row minus 4.

In addition, the registers in question are preferably duplicated over two lines, the first including four first registers 1A, 2A, 3A and 4A (line A) and the second including four second registers 1B, 2B, 3B and 4B (line B). This solution permits maximum speed of operation to be guaranteed. While data is loaded into one line (line A instead of line B for example), the data grouped in the other line (line B instead of line A for example) can be sent.

Multiplexers 5A, 5B, 6A, 6B, 7A and 7B are provided at the input to the above-described registers (except for the blocks 4A and 4B), these being destined to pass to the input of their respective block either the input signal present on a line 8 and known as Data_in (generically n-bit) or, in alternative, the output signal of the block immediately upstream.

Reference 9 indicates a control unit destined to pilot the blocks 1A, 2A, 3A and 4A, as well as the multiplexer 5A, 6A and 7A and - in a symmetrical manner - the blocks 1B, 2B, 3B and 4B, as well as the multiplexer 5B, 6B and 7B, via corresponding enabling EN_A and EN_B signals and selection SEL_A and SEL_B signals. Naturally, the suffixes A and B indicate the lines and the blocks to which the control signals are destined.

Lastly, reference 10 indicates a multiplexer on the outputs of which are present, as overall circuit outputs and indicated as Data out, either the data available on block 1A or the data available on block 1B, in function of a selection signal SEL_OUT produced by the unit. 9.

The control unit 9 operates according to the following criterion:
1) acquire a first data item in input, shift block 1A by one position and write it in the register that has just been freed.
2) acquire a second data item in input, shift block 2A by one position and write it in the register that has just been freed.
3) acquire the next data item in input, shift block 3A by one position and write it in the register that has just been freed.
4) acquire the next data item in input, shift block 4A by one position and write it in the register that has just been freed.
5) acquire the first data item in input, shift block 1A by one position and write it in the register that has just been freed.
6) acquire the next data item in input, shift block 2A by one position and write it in the register that has just been freed.
7) return to step 3 until all the data items of a row minus 4 have been loaded, when a block 4A has just been written.
8) shift block 1A by one position, thereby sending the first encoded data item in output and write the fourth from last data item acquired in input on block 1A in the register that has just been freed.
9) select multiplexer 5A in input to block 1A and shift blocks 2A and 1A by one position, thereby outputting a data item from 2A which is passed in input to 1A and write the third from last data item acquired in input on block 2A in the register that has just been freed.
10) select multiplexer 6A in input to block 2A and shift blocks 3A, 2A and 1A by one position, thereby outputting a data item from 3A which is passed in input to 2A and a data item from 2A which is passed in input to 1A, and write the penultimate data item acquired in input on block 3A in the register that has just been freed.
11) the same procedure is performed for writing the last data item on the block 4A and shifting all of the data items in the individual blocks up to the output.
12) the same technique (described in steps 1 to 11) is then applied for writing the next row in line B and simultaneously sending out the encoded data of line A.
13) the same technique is repeated for all of the rows, alternating the two lines A and B so that data is loaded into one line while data is sent out from the other line.

By adopting the above-described technique, it is possible to generate a flow of data in output Data_out with the same frequency of input and only an initial delay equal to a line minus four data items. The data in question is thus suitable for being transmitted over the bus B with reduced switching activity.

Naturally, as is illustrated in Figure 4, it is possible to reduce switching activity even further by providing two additional modules, one on one side between the encoder 3 and the bus B and the other between the bus B and the decoder 4 on the other side, respectively an encoder 3' and a decoder 4', which implement any type of known solution for reducing switching activity (the bus inverter technique for example). In this way, it is possible to further improve overall system performance.

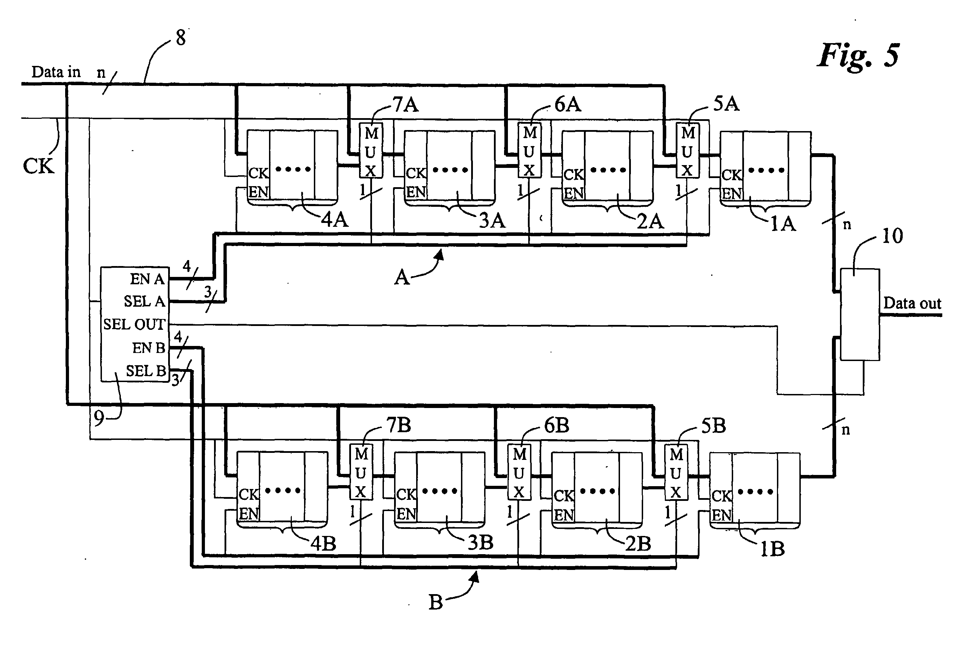

The structure of the decoder 4 can be based on the same circuit layout represented in Figure 5. By passing the encoded data to the input line 8 in Figure 5 it is in fact possible to acquire signals in output from a circuit having the layout represented in Figure 5 that correspond to Bayer signals in the classical format.

The processor 2 receives the data with the same frequency as the output from the sensor, with an initial delay equal to 2 lines minus four data items: this delay is given by the sum of the delays that arise at the encoder 3 level and at the decoder 4 level.

The solution according to the invention permits a considerable reduction to be achieved in the switching activity (SA) prone to arise on the connection bus B between the Bayer sensor 1 and the processor 2 destined to process the relative data.

For example, by creating a line of 8 pixels (to reduce the size of the encoder as a whole and therefore without operating on the entire row), it is possible to achieve a reduction in switching activity of approximately 30%.

It will be appreciated that the solution that has just been described allows the output of data to commence even before memorization of the row is completed. This permits savings on circuit components equivalent to 4 n-bit buffer memories, reducing the initial wait delay by 4 CLK pulses.

It will be also be appreciated that the described technique is in no way restricted by the number of pixels utilized. The described solution is in fact applicable both in the described case in which the buffer contains the entire row and in the case in which the size of the buffer is different from the size of the row, or rather, for example, 4 pixels, half a row, one and half rows, two rows etc.

Naturally, the principle of the invention being understood, the details of realization and forms of embodiment could be extensively changed with respect to that described and illustrated without leaving the scope of this invention, as defined by the enclosed claims.

## Claims

1. A process for converting digital video signals from a Bayer format (1), in which the pixels of each line are alternatively coded with two colours, to an encoded format, for transmitting said video signals , said process including grouping pixels of said Bayer format in sets of pixels that code the same colour, **characterized in that** said grouping in sets of pixel includes ordering said sets of pixels in a sequence in which each set of pixels coding one colour is followed by a set of pixels coding another colour, and **in that** said video signals are transmitted in said encoded format over a bus (B), said encoded format including a sequence of pixel values based on said ordered sequence of sets of pixels for reducing switching activity.

2. A process according to claim 1, **characterized in that** on each sets of pixels is performed a further grouping of the upper (H) and lower (L) parts of the pixel values.

3. A process according to claim 1 or 2, **characterized in that**:
- in said Bayer format, said pixels are organised in the format:
P_{1,1}(R)H,P_{1,1}(R)L,P_{1,2}(G)H,P_{1,2}(G)L,....,P_{1,n-1}(G)H,P_{1,n-1}(G)L,P₁₋ₙ(R)H,P₁₋ₙ(R)L,
P_{2,1}(G)H,P_{2,1}(G)L,P₂,₂(B)H,P_{2,2},(B)L,....,P_{2,n-1}(B)H,P_{2,n-1}(B)L,P_{2,n}(G)H,P_{2,n}(G)L,
..............................................................................................................................,
P_{m,1}(R)H,P_{m,1}(R)L,P_{m,2}(G)H,P_{m,2}(G)L,....,P_{m,n-1}(G)H,Pₘ,ₙ₋₁(G)L,P_{m,n}(R)H,P_{m,n}(R)L,
where:
P₁,₁(R)H=Pixel row 1, position 1 (Red) upper bits
P_{1,1}(R)L=Pixel row 1, position 1 (Red) lower bits
P_{1,2}(G)H=Pixel row 1, position 2 (Green) upper bits
P₁,₂(G)L=Pixel row 1, position (Green) lower bits
...................................
Pₘ,ₙ(R)H=Pixel row m, position n (Red) upper bits
P_{m,n}(R)L=Pixel row m, position n (Red) lower bits
and, in said encoded format, said pixels are organized in the format:
P_{1,1}(R)H,P₁,₃(R)H,.....,P_{1,n}(R)H,P_{1,1}(R)L,P_{1,3}(R)L,......P_{1,n}(R)L,
P_{1,2}(G)H,P_{1,4}(G)H,.....,P_{1,n-1}(G)H,P_{1,2}(G)L,P₁,₄(G)L,.....P_{1,n-1}(G)L,
P_{2,1}(G)H,P_{2,3}(G)H,.....,P_{2,n}(G)H,P_{2,1}(G)L,P_{2,3}(G)L,......P₂,ₙ₋₁(G)L,
P_{2,2}(B)H,P₂.₄(B)H,.....,P_{2,n-1}(B)H,P_{2,2}(B)L,P_{2,4}(B)L,.....P_{2,n-1}(B)L,
............................................................, P_{m,1}(R)H,P_{m,3}(R)H,.....,P_{m,n}(R)H,P_{m,1}(R)L,P_{m,3}(R)L,......P_{m,n}(R)L,
P_{m,2}(G)H,P_{m,4}(G)H,.....,P_{m,n-1}(G)H,Pₘ,₂(G)L,P_{m,4}(G)L,.....P_{m,n-1}(G)L,

4. A process according to claim 1 or 2 or 3, **characterized in that** for the transmission over said bus (B), said video signals in said encoded format are subjected to an additional coding operation (3' and 4') for reducing switching activity on the bus (B) itself.

5. A process according to any of the previous claims 1 to 4, **characterized in that** it includes the operation of employing a buffer of a size chosen among an entire row of signals and a different size from the size of the row, the application of the process thereby being independent of the number of pixels utilized.

6. A process according to claim 5, **characterized in that** it includes the operation of choosing said size from the group composed of: 4 pixels, half a row, a row, one and a half rows and two rows.

7. A system (3 and 4) for converting said digital video signals from a Bayer format (1), in which the pixels of each line are alternatively coded with two colours, to an encoded format, transmitting said video signals in said encoded format over a bus (B), said system including at least a converter element (3, 4) configured for grouping pixels of said Bayer format in sets of pixels that code the same colour, **characterized in that** said at least one converter element (3 and 4) is configured for realizing the conversion between said Bayer format and said encoded format such that, in said encoded format, said grouping in sets of pixel includes ordering said sets of pixels in a sequence in which each set of pixels coding one colour is followed by a set of pixels coding another colour, and **in that** said system is configured for transmitting said video signals in said encoded format over a bus (B), said encoded format including a sequence of pixel values based on said ordered sequence of sets of pixels.

8. A system according to claim 7, **characterized in that** said converter element (3, 4) is configured for performing a further grouping of the upper (H) and lower (L) parts of the pixel values on each sets of pixels.

9. A system according to claim 7 or 8, **characterized in that**:
- in said Bayer format, said pixels are organised in the format:
P₁,₁(R)H,P_{1,1}(R)L,P₁,₂(G)H,P₁,₂(G)L,....,P₁,ₙ₋₁(G)H,P_{1,n-1}(G)L,P₁,ₙ(R)H,P₁,ₙ(R)L,
P₂,₁(G)H,P_{2,1}(G)L,P_{2,2}(B)H,P₂,₂(B)L,....,P₂,ₙ₋₁(B)H,P₂,ₙ₋₁(B)L,P₂,ₙ(G)H,P₂,ₙ(G)L,
..............;.......................................................
P_{m,1}(R)H,Pₘ,₁(R)L,Pₘ,₂(G)H,Pₘ,₂(G)L,....,Pₘ,ₙ₋₁(G)H,Pₘ,ₙ₋₁(G)L,P_{m,n}(R)H,Pₘ,ₙ(R)L,
where:
P_{1,1}(R)H=Pixel row 1, position 1 (Red) upper bits
P_{1,1}(R)L=Pixel row 1, position 1 (Red) lower bits
P_{1,2} (G) H=Pixel row 1, position 2 (Green) upper bits
P_{1,2} (G) L=Pixel row 1, position (Green) lower bits
..................................
P_{m,n}(R)H=Pixel row m, position n (Red) upper bits
P_{m,n}(R)L=Pixel row m, position n (Red) lower bits
and, in said encoded format, said pixels are organized in the format:
P₁,₁(R)H,P₁,₃(R)H,.....,P₁,ₙ(R)H,P₁,₁(R)L,P₁,₃(R)L,......P₁,ₙ(R)L,
P₁,₂(G)H,P₁,₄(G)H,.....,P₁,ₙ₋₁(G)H,P₁,₂(G)L,P₁,₄(G)L,.....P₁,ₙ₋₁(G)L,
P_{2,1}(G)H,P₂,₃(G)H,.....,P₂,ₙ(G)H,P₂,(G)L,P₂,₃(G)L,......P₂,ₙ₋₁(G)L,
P_{2,2}(B)H,P₂,₄(B)H,.....,P₂,ₙ₋₁(B)H,P_{2,2}(B)L,P₂,₄(B)L,.....P_{2,n-1}(B)L,
............................................................,
P_{m,1}(R)H,P_{m,3}(R)H,.....,Pₘ,ₙ(R)H,P_{m,1}(R)L,P_{m,3}(R)L,......P_{m,n}(R)L,
P_{m,2}(G)H,P_{m,4}(G)H,.....,P_{m,n-1}(G)H,Pₙ,₂(G)L,P_{m,4}(G)L,.....P_{m,n-1}(G)L,

10. A system according to claim 7 or claim 8 or claim 9, **characterized in that** said at least one converter element is an encoder (3) for converting said digital video signals from said Bayer format (1) to said encoded format.

11. A system according to claim 7 or claim 8 or claim 9, **characterized in that** said at least one converter element is a decoder for converting said digital video signals from said encoded format to said Bayer format (1).

12. A system according to any of the claims 8 to 11, **characterized in that** said at least one converter element includes:
- at least one sequence of registers (1A, 2A, 3A, 4A and 1B, 2B, 3B, 4B) for containing the pixels of a respective row of said digital video signal, said at least one sequence of registers including:
- a first block (1A and 2B) for containing the upper part of the set of pixels that are in odd positions on said respective row,
- a second block (2A and 2B) for containing the lower part of the set of pixels that are in odd positions on said respective row,
- a third register (3A and 3B) for containing the upper part of the set of pixels that are in even positions on said respective row, and
- a fourth register (4A and 4B) for containing the lower part of the set of pixels that are in even positions on said respective row.

13. A system according to claim 12, **characterized in that** said registers (1A and 1B, 2A and 2B, 3A and 3B, and 4A and 4B) are sized so as to contain all data items relative to said digital video signals of a row minus 4.

14. A system according to claim 12 or claim 13, **characterized in that** it includes at least two sequences of mutually equivalent registers (1A - 4A and 1B - 4B) with an associated control unit (9) configured for piloting said at least two sequences of equivalent registers in a manner to allow, simultaneously and in alternating sequence, the loading of digital video signals in input onto one of said equivalent sequences (1A - 4A with respect to 1B - 4B) and the emission in output of the converted video signals from the other equivalent sequence (1B - 4B with respect to 1A - 4A).

15. A system according to any of the claims 12 to 14, **characterized in that** it includes a control unit (9), which pilots the operation of said system such that the system emits converted digital video signals in output even before having finished to memorize the digital video signals arriving at its input for conversion.

16. A system according to claim 10 and any of the claims 12 to 15, **characterized in that** said at least one converter element (3) has an associated encoder circuit (3') for subjecting said digital video signals in said encoded format to an additional encoding operation for reducing switching activity on said bus (B).

17. A system according to claim 11 and any of the claims 12 to 15, **characterized in that** said at least one converter element (4) has an associated decoder circuit (4') suitable for receiving digital video signals subjected to an additional encoding operation, for reducing switching activity on said bus (B) in input, and generating said digital video signals in said encoded format in output.

18. A system according to any of the claims 8 to 17, **characterized in that** it includes a buffer of size chosen among an entire row of signals and a different size from the size of the row, the operation of the system thereby being independent of the number of pixels utilized.

19. A system according to claim 18, **characterized in that** said size is comprised in the group composed of: 4 pixels, half a row, one row, one and a half rows and two rows.

## Patentansprüche

1. Prozess zum Konvertieren digitaler Videosignale aus einem Bayer-Format (1), in welchem die Pixel jeder Zeile abwechselnd mit zwei Farben kodiert sind, in ein kodiertes Format zum Übertragen der Videosignale, wobei der Prozess das Gruppieren von Pixeln des Bayer-Formats in Mengen von Pixeln beinhaltet, welche dieselbe Farbe kodieren, **dadurch gekennzeichnet, dass** das Gruppieren in Mengen von Pixeln das Ordnen der Mengen von Pixeln in einer Reihenfolge beinhaltet, in welcher jede Menge von Pixeln, die eine Farbe kodiert, durch eine Menge von Pixeln gefolgt wird, die eine andere Farbe kodiert, und dadurch, dass die Videosignale in dem kodierten Format über einen Bus (B) übertragen werden, wobei das kodierte Format basierend auf der geordneten Reihenfolge von Mengen von Pixeln eine Reihenfolge von Pixelwerten zum Vermindern von Schaltaktivität beinhaltet.

2. Prozess nach Anspruch 1, **dadurch gekennzeichnet, dass** auf jeder Menge von Pixeln eine weitere Gruppierung des oberen (H) sowie des unteren (L) Teils der Pixelwerte durchgeführt wird.

3. Prozess nach Anspruch 1 oder 2, **dadurch gekennzeichnet, dass**:
- in dem Bayer-Format die Pixel in folgendem Format geordnet sind:
P_{1,1}(R)H,P_{1,1}(R)L,P_{1,2}(G)H,P_{1,2}(G)L,.....,P_{1,n}(G)H,P₁,ₙ₋₁(G)L,P_{1,n}(R)H,P_{1,n}(R)L,
P_{2,1}(G)H,P_{2,1}(G)L,P_{2,2}(B)H,P_{2,2}(B)L,....,P_{2,n-1}(B)H,P_{2,n-1}(B)L,P_{2,n}(G)H,P_{2,n}(G)L,
......................................................................,
P_{m,1}(R)H,P_{m,1}(R)L,P_{m,2}(G)H,P_{m,2}(G)L,.....,P_{m,n-1}(G)H,P_{m,n-1}(G)L,P_{m,n}(R)H,P_{m,n}(R)L,
wobei gilt:
P_{1,1}(R) H=Pixel Zeile 1, Position 1 (Rot) höhere Bits
P_{1,1} (R) L=Pixel Zeile 1, Position 1 (Rot) niedrigere Bits
P_{1,2} (R) H=Pixel Zeile 1, Position 2 (Grün) höhere Bits
P_{1,2} (R) L=Pixel Zeile 1, Position (Grün) niedrigere Bits
......................................
Pₘ,ₙ (R) H=Pixel Zeile 1, Position n (Rot) höhere Bits
Pₘ,ₙ(R) L=Pixel Zeile 1, Position n (Rot) niedrigere Bits
und wobei in dem kodierten Format die Pixel in folgendem Format organisiert sind:
P_{1,1}(R)H,P₁,₃(R)H,....,P₁,ₙ(R)H,P_{1,1}(R)L,P_{1,3}(R)L,......P_{1,n}(R)L,
P_{1,2}(G)H,P_{1,4}(G)H,......P_{1,n-1}(G)H,P_{1,2}(G)L,P_{1,4}(G)L,.....P_{1,n-1}(G)L,
P_{2,1}(G)H,P₂,₃(G)H,.....,P_{2,n}(G)H,P_{2,1}(G)L,P_{2,3}(G)L,.....P_{2,n-1}(G)L,
P_{2,2}(B)H,P_{2,4}(B)H,.....,P_{2,n-1}(B)H,P₂,₂(B)L,P₂,₄(B)L,.....P_{2,n-1}(B)L,
............................................................,
P_{m,1}(R)H,Pₘ,₃(R)H,.....,Pₘ,ₙ(R)H,Pₘ,₁(R)L,P_{m,3}(R)L,......P_{m,n}(R)L,
P_{m,2}(G)H,Pₘ,₄(G)H,.....,P_{m,n-1}(G)H,P_{m,2}(G)L,P_{m,4}(G)L,.....P_{m,n-1}(G)L,

4. Prozess nach Anspruch 1 oder 2 oder 3, **dadurch gekennzeichnet, dass** die Videosignale in dem kodierten Format für die Übertragung über den Bus (B) einer zusätzlichen Kodierungsoperation (3' und 4') zum Vermindern der Schaltaktivität auf dem Bus (B) selber unterworfen werden.

5. Prozess nach irgendeinem der vorstehenden Ansprüche 1 bis 4, **dadurch gekennzeichnet, dass** er die Operation des Gebrauches eines Puffers einer Größe beinhaltet, die zwischen einer gesamten Zeile von Signalen und einer unterschiedlichen Größe aus der Größe der Zeile ausgewählt ist, wobei dadurch die Anwendung des Prozesses von der Anzahl der verwendeten Pixel unabhängig wird.

6. Prozess nach Anspruch 5, **dadurch gekennzeichnet, dass** er die Operation des Auswählens der Größe aus einer Gruppe beinhaltet, welche zusammengesetzt ist aus: 4 Pixeln, einer halben Zeile, einer Zeile, eineinhalb Zeilen sowie zwei Zeilen.

7. System (3 und 4) zum Umwandeln der digitalen Videosignale aus einem Bayer-Format (1), in welchem die Pixel jeder Zeile abwechselnd durch zwei Farben kodiert sind, in ein kodiertes Format, Übermitteln der Videosignale in dem kodierten Format über einen Bus (B), wobei das System mindestens ein Konverterelement (3, 4) beinhaltet, das zum Gruppieren von Pixeln des Bayer-Formats in Mengen von Pixeln konfiguriert ist, welche die gleiche Farbe kodieren, **dadurch gekennzeichnet, dass** das mindestens eine Konverterelement (3 und 4) zum Realisieren der Umwandlung zwischen dem Bayer-Format und dem kodierten Format so konfiguriert ist, dass in dem kodierten Format die Gruppierung in Mengen von Pixeln das Ordnen der Mengen von Pixeln in eine Reihenfolge beinhaltet, in welcher jede eine Farbe kodierende Menge von Pixeln durch eine Menge von Pixeln gefolgt wird, die eine andere Farbe kodiert, und dadurch, dass das System zum Übertragen der Videosignale in dem kodierten Format über einen Bus (B) konfiguriert ist, wobei das kodierte Format eine Reihenfolge von Pixelwerten basierend auf der geordneten Reihenfolge von Mengen von Pixeln beinhaltet.

8. System nach Anspruch 7, **dadurch gekennzeichnet, dass** das Konverterelement (3, 4) zum Ausführen einer weiteren Gruppierung der höheren (H) und der niedrigeren (L) Teile der Pixelwerte auf jeder der Mengen von Pixeln konfiguriert ist.

9. System nach Anspruch 7 oder 8, **dadurch gekennzeichnet, dass**
- in dem Bayer-Format die Pixel in dem folgenden Format organisiert sind:
P_{1,1}(R)H,P_{1,1}(R)L,P₁,₂(G)H,P₁,₂2(G)L,.....,P₁,ₙ₋₁(G)H,P₁,ₙ₋₁(G)L,P₁,ₙ(R)H,P₁,ₙ(R)L,
P_{2,1}(G)H,P₂,₁(G)L,P₂,₂(B)H,P_{2,2}(B)L,.....P_{2,n-1}(B)H,P_{2,n-1}(B)L,P_{2,n}(G)H,P_{2,n}(G)L,
......................................................................,
P_{m,1}(R)H,Pₘ,₁(R)L,P_{m,2}(G)H,P_{m,2}(G)L,.....P_{m,n-1}(G)H,P_{m,n-1}(G)L,P_{m,n}(R)H,Pₘ,ₙ(R)L,
wobei gilt:
P_{1,1}(R) H=Pixel Zeile 1, Position 1 (Rot) höhere Bits
P_{1,1}(R) L=Pixel Zeile 1, Position 1 (Rot) niedrigere Bits
P_{1,2}(R) H=Pixel Zeile 1, Position 2 (Grün) höhere Bits
P_{1,2}(R) L=Pixel Zeile 1, Position (Grün) niedrigere Bits
......................................
P_{m,n} (R) H=Pixel Zeile 1, Position n (Rot) höhere Bits
P_{m,n} (R) L=Pixel Zeile 1, Position n (Rot) niedrigere Bits
und wobei in dem kodierten Format die Pixel in folgendem Format organisiert sind:
P_{1,1}(R)H,P_{1,3}(R)H,.....,P₁,ₙ(R)H,P_{1,1}(R)L,P_{1,3}(R)L.....P₁,n(R)L,
P_{1,2}(G)H,P_{1,4}(G)H,.....,P_{1,n-1}(G)H,P_{1,2}(G)L,P_{1,4}(G)L,.....P₁,ₙ₋₁(G)L,
P_{2,1}(G)H,P_{2,3}(G)H,.....,P_{2,n}(G)H,P₂,₁(G)L,P_{2,3}(G)L,......P_{2,n-1}(G)L,
P_{2,2}(B)H,P_{2,4}(B)H,.....,P₂,ₙ₋₁(B)H,P_{2,2}(B)L,P_{2,4}(B)L,.....P_{2,n-1}(B)L,
............................................................,
P_{m,1}(R)H,P_{m,3}(R)H.....,P_{m,n}(R)H,P_{m,1}(R)L,P_{m,3}(R)L,......P_{m,n}(R)L,
P_{m,2}(G)H,P_{m,4}(G)H,.....,P_{m,n-1}(G)H,P_{m,2}(G)L,Pₘ,₄(G)L,.....Pₘ,ₙ₋₁(G)L,

10. System nach Anspruch 7 oder 8 oder 9, **dadurch gekennzeichnet, dass** das mindestens eine Konverterelement ein Enkoder (3) zum Konvertieren der digitalen Videosignale aus dem Bayer-Format (1) in das kodierte Format ist.

11. System nach Anspruch 7 oder 8 oder 9, **dadurch gekennzeichnet, dass** das mindestens eine Konverterelement ein Dekoder zum Umwandeln des digitalen Videosignals aus dem kodierten Format in das Bayer-Format (1) ist.

12. System nach irgendeinem der Ansprüche 8 bis 11, **dadurch gekennzeichnet, dass** das mindestens eine Konverterelement beinhaltet:
- mindestens eine Reihenfolge von Registern (1A, 2A, 3A, 4A und 1B, 2B, 3B, 4B) zum Aufnehmen der Pixel einer entsprechenden Zeile des digitalen Videosignals, wobei die mindestens eine Reihenfolge von Registern beinhaltet:
- einen ersten Block (1A und 2B) zum Aufnehmen des höheren Teils der Menge von Pixeln, die in ungeradzahligen Stellungen in der entsprechenden Zeile sind,
- einen zweiten Block (2A und 2B) zum Aufnehmen des niedrigeren Teils der Menge von Pixeln, die an ungeradzahligen Stellen der entsprechenden Zeile sind,
- ein drittes Register (3A und 3B) zum Aufnehmen des höheren Teils der Menge an Pixeln, die an geradzahligen Stellen in der entsprechenden Zeile sind, und
- ein viertes Register (4A und 4B) zum Aufnehmen des niedrigeren Teils der Menge an Pixeln, die in geradzahligen Stellen der entsprechenden Zeile sind.

13. System nach Anspruch 12, **dadurch gekennzeichnet, dass** die Register (1A und 1B, 2A und 2B, 3A und 3B und 4A und 4B) dimensioniert sind, so dass sie alle Dateneinträge bezüglich des digitalen Videosignals einer Zeile abzüglich vier aufnehmen.

14. System nach Anspruch 12 oder 13, **dadurch gekennzeichnet, dass** es mindestens zwei Folgen gegenseitig äquivalenter Register (1A - 4A und 1B - 4B) mit einer verknüpften Steuerungseinheit (9) beinhaltet, die zum Lenken der mindestens zwei Folgen äquivalenter Register in einer Weise konfiguriert sind, um gleichzeitig und abwechselnder Reihenfolge das Laden digitaler Videosignale im Eingang auf eine der äquivalenten Folgen (1A - 4A in Bezug auf 1B - 4B) und die Aussendung an den Ausgang des umgewandelten Videosignals von der anderen äquivalenten Folge (1B - 4B in Bezug auf 1A - 4A) zu erlauben.

15. System nach irgendeinem der Ansprüche 12 bis 14, **dadurch gekennzeichnet, dass** es eine Steuerungseinheit (9) enthält, welche die Operation des Systems auf eine Art und Weise so lenkt, dass das System umgewandelte digitale Videosignale am Ausgang sogar vor dem Abschluss des Speicherns der digitalen Videosignale, die an seinem Eingang zur Umwandlung ankommen, abgibt.

16. System nach Anspruch 10 und irgendeinem der Ansprüche 12 bis 15, **dadurch gekennzeichnet, dass** das mindestens eine Konverterelement (3) eine verknüpfte Enkoderschaltung (3') zum Unterwerfen der digitalen Videosignale in dem kodierten Format einer zusätzlichen Enkodierungsoperation zum Vermindern der Schaltaktivität des Busses (B) aufweist.

17. System nach Anspruch 11 und irgendeinem der Ansprüche 12 bis 15, **dadurch gekennzeichnet, dass** das mindestens eine Konverterelement (4) eine verknüpfte Dekoderschaltung (4') aufweist, die geeignet ist zum Entgegennehmen von einer zusätzlichen Enkodierungsoperation unterworfenen digitalen Videosignalen zum Vermindern der Schaltaktivität auf den Bus (B) am Eingang und zum Erzeugen des digitalen Videosignals in dem kodierten Format am Ausgang.

18. System nach irgendeinem der Ansprüche 8 bis 17, **dadurch gekennzeichnet, dass** es einen Puffer von einer Größe beinhaltet, die zwischen einer gesamten Zeile von Signalen und einer unterschiedlichen Größe aus der Größe der Zeile ausgewählt ist, wodurch der Betrieb des Systems unabhängig von der Anzahl der genutzten Pixel wird.

19. System nach Anspruch 18, **dadurch gekennzeichnet, dass** die Größe in der Gruppe enthalten ist, welche gebildet wird aus: 4 Pixeln, einer halben Zeile, einer Zeile, eineinhalb Zeilen und zwei Zeilen.

## Revendications

1. Procédé pour convertir des signaux vidéo numériques d'un format Bayer (1), dans lequel les pixels de chaque ligne sont codés alternativement avec deux couleurs, en un format codé, pour transmettre lesdits signaux vidéo, ledit procédé comprenant le groupement de pixels dudit format Bayer en ensembles de pixels qui codent la même couleur, **caractérisé en ce que** ledit groupement en ensembles de pixels comprend l'ordonnancement desdits ensembles de pixels dans une séquence dans laquelle chaque ensemble de pixels codant une couleur est suivi par un ensemble de pixels codant une autre couleur, et **en ce que** lesdits signaux vidéo sont transmis dans ledit format codé sur un bus (B), ledit format codé comprenant une séquence de valeurs de pixel basée sur ladite séquence ordonnée d'ensembles de pixels pour réduire l'activité de commutation.

2. Procédé selon la revendication 1, **caractérisé en ce que** sur chaque ensemble de pixels est effectué un groupement ultérieur des parties supérieures (H) et inférieures (L) des valeurs de pixel.

3. Procédé selon la revendication 1 ou 2, **caractérisé en ce que** :
- dans ledit format Bayer, lesdits pixels sont organisés dans le format :
P_{1,1}(R)H,P_{1,1}(R)L,P_{1,2}(G)H,P_{1,2}(G)L,.....,P_{1,n-1}(G)H,P_{1,n-1}(G)L,P_{1,n}(R)H,P_{1,n}(R)L,
P_{2,1}(G)H,P_{2,1}(G)L,P₂,₂(B)H,P₂,₂(B)L,....,P_{2,n-1}(B)H,P₂,ₙ₋₁(B)L,P_{2,n}(G)H,P_{2,n}(G)L,
......................................................................,
P_{m,1}(R)H,Pₘ,₁(R)L,Pₘ,₂(G)H,Pₘ,₂(G)L,....,P_{m,n-1}(G)H,P_{m,n-1}(G)L,P_{m,n}(R)H,Pₘ,ₙ(R)L,
où :
P1,1(R) H=Rangée de pixels 1, position 1 (Rouge) bits supérieurs
P1,1 (R) L=Rangée de pixels 1, position 1 (Rouge) bits inférieurs
P1,2(G) H=Rangée de pixels 1, position 2 (Vert) bits supérieurs
P1,2(G) L=Rangée de pixels 1, position (Vert) bits inférieurs
............................................................................
Pm,n(R) H=Rangée de pixels m, position n (Rouge) bits supérieurs
Pm,n(R) L=Rangée de pixels m, position n (Rouge) bits inférieurs
et, dans ledit format codé, lesdits pixels sont organisés dans le format :
P_{1,1}(R)H,P_{1,3}(R)H,.....,P_{1,n}(R)H,P_{1,1}(R)L,P_{1,3}(R)L,......P_{1,n}(R)L,
P₁,₂(G)H,P_{1,4}(G)H,.....,P_{1,n-1}(G)H,P_{1,2}(G)L,P₁,₄(G)L,.....P_{1,n-1}(G)L,
P_{2,1}(G)H,P_{2,3}(G)H,.....,P_{2,n}(G)H,P_{2,1}(G)L,P_{2,1}(G)L,......P_{2,n-1}(G)L,
P_{2,2}(B)H,P_{2,4}(B)H,.....,P_{2,n-1}(B)H,P_{2,2}(B)L,P_{2,4}(B)L,.....P_{2,n-1}(B)L,
............................................................,
P_{m,1}(R)H,P_{m,3}(R)H,.....,P_{m,n}(R)H,P_{m,1}(R)L,P_{m,3}(R)L,......P_{m,n}(R)L,
P_{m,2}(G)H,P_{m,4}(G)H,.....,P_{m,n}(G)H,P_{m,2}(G)L,P_{m,4}(G)L,.....P_{m,n-1}(G)L,

4. Procédé selon la revendication 1 ou 2 ou 3, **caractérisé en ce que**, pour la transmission sur ledit bus (B), lesdits signaux vidéo dans ledit format codé sont soumis à une opération de codage additionnelle (3' et 4') pour réduire l'activité de commutation sur le bus (B) lui-même.

5. Procédé selon l'une quelconque des revendications précédentes 1 à 4, **caractérisé en ce qu'**il comprend l'opération d'utilisation d'une mémoire tampon d'une dimension choisie parmi une rangée complète de signaux et une dimension différente de la dimension de la rangée, l'application du procédé étant ainsi indépendante du nombre de pixels utilisés.

6. Procédé selon la revendication 5, **caractérisé en ce qu'**il comprend l'opération de sélection de ladite dimension parmi le groupe composé de : 4 pixels, une demi-rangée, une rangée, une rangée et demie et deux rangées.

7. Système (3 et 4) pour convertir lesdits signaux vidéo numériques d'un format Bayer (1), dans lequel des pixels de chaque ligne sont codés alternativement avec deux couleurs, en un format codé, transmettant lesdits signaux vidéo dans ledit format codé sur un bus (B), ledit système comprenant au moins un élément convertisseur (3, 4) configuré pour grouper des pixels dudit format Bayer en ensembles de pixels qui codent la même couleur, **caractérisé en ce que** ledit au moins un élément convertisseur (3 et 4) est configuré pour réaliser la conversion entre ledit format Bayer et ledit format codé de manière que, dans ledit format codé, ledit groupement en ensembles de pixels comprend l'ordonnancement desdits ensembles de pixels dans une séquence dans laquelle chaque ensemble de pixels codant une couleur est suivi par un ensemble de pixels codant une autre couleur, et **en ce que** ledit système est configuré pour transmettre lesdits signaux vidéo dans ledit format codé sur un bus (B), ledit format codé comprenant une séquence de valeurs de pixel basée sur ladite séquence ordonnée d'ensembles de pixels.

8. Système selon la revendication 7, **caractérisé en ce que** ledit élément convertisseur (3, 4) est configuré pour effectuer un groupement ultérieur des parties supérieures (H) et inférieures (L) des valeurs de pixel sur chaque ensemble de pixels.

9. Système selon la revendication 7 ou 8, **caractérisé en ce que** :
- dans ledit format Bayer, lesdits pixels sont organisés dans le format :
P_{1,1}(R)H,P_{1,1}(R)L,P_{1,2}(G)H,P_{1,2}(G)L,.....,P_{1,n-1}(G)H,P_{1,n-1}(G)L,P_{1,n}(R)H,P_{1,n}(R)L,
P_{2,1}(G)H,P_{2,1}(G)L,P₂,₂(B)H,P₂,₂(B)L,....,P_{2,n-1}(B)H,_{2,n-1}(B)L,P_{2,n}(G)H,P_{2,n}(G)L,
......................................................................,
Pₘ,₁(R)H,Pₘ,₁(R)L,Pₘ,₂(G)H,P_{m,2}(G)L,.....,P_{m,n-1}(G)H,P_{n,n-1}(G)L,P_{m,n}(R)H,P_{m,n}(R)L,
où :
P1,1(R) H=Rangée de pixels 1, position 1 (Rouge) bits supérieurs
P1,1(R) L=Rangée de pixels 1, position 1 (Rouge) bits inférieurs
P1,2(G) H=Rangée de pixels 1, position 2 (Vert) bits supérieurs
P1,2(G) L=Rangée de pixels 1, position (Vert) bits inférieurs
............................................................................
Pm,n(R) H=Rangée de pixels m, position n (Rouge) bits supérieurs
Pm,n(R) L=Rangée de pixels m, position n (Rouge) bits inférieurs
et, dans ledit format codé, lesdits pixels sont organisés dans le format :
P_{1,1}(R)H,P_{1,3}(R)H,.....,P_{1,n}(R)H,P_{1,1}(R)L,P_{1,3}(R)L,......P_{1,n}(R)L,
P₁,₂(G)H,P_{1,4}(G)H,.....,P_{1,n-1}(G)H,P_{1,2}(G)L,P_{1,4}(G)L,.....P_{1,n-1}(G)L,
P₂,₁(G)H,P_{2,3}(G)H,.....,P_{2,n}(G)H,P_{2,1}(G)L,P_{2,3}(G)L,......P₂,ₙ₋₁(G)L,
P_{2,2}(B)H,P_{2,4}(B)H,.....,P_{2,n-1}(B)H,P_{2,2}(B)L,P_{2,4}(B)L,.....P_{2,n-1}(B)L,
............................................................,
P_{m,1}(R)H,P_{m,3}(R)H,....,P_{m,n}(R)H,P_{m,1}(R)L,P_{m,3}(R)L,......P_{m,n}(R)L,
P_{m,2}(G)H,P_{m,4}(G)H,.....,P_{m,n-1}(G)H,P_{m,2}(G)L,P_{m,4}(G)L,.....P_{m,n-1}(G)L,

10. Système selon la revendication 7 ou la revendication 8 ou la revendication 9, **caractérisé en ce que** ledit au moins un élément convertisseur est un codeur (3) pour convertir lesdits signaux vidéo numériques dudit format Bayer (1) dans ledit format codé.

11. Système selon la revendication 7 ou la revendication 8 ou la revendication 9, **caractérisé en ce que** ledit au moins un élément convertisseur est un décodeur pour convertir lesdits signaux vidéo numériques dudit format codé dans ledit format Bayer (1).

12. Système selon l'une quelconque des revendications 8 à 11, **caractérisé en ce que** ledit au moins un élément convertisseur comprend :
- au moins une séquence de registres (1A, 2A, 3A, 4A et 1B, 2B, 3B, 4B) pour contenir les pixels d'une rangée respective dudit signal vidéo numérique, ladite au moins une séquence de registres comprenant :
- un premier bloc (1A et 2B) pour contenir la partie supérieure de l'ensemble de pixels qui sont dans des positions impaires sur ladite rangée respective,
- un deuxième bloc (2A et 2B) pour contenir la partie inférieure de l'ensemble de pixels qui sont dans des positions impaires sur ladite rangée respective,
- un troisième registre (3A et 3B) pour contenir la partie supérieure de l'ensemble de pixels qui sont dans des positions paires sur ladite rangée respective, et
- un quatrième registre (4A et 4B) pour contenir la partie inférieure de l'ensemble de pixels qui sont dans des positions paires sur ladite rangée respective.

13. Système selon la revendication 12, **caractérisé en ce que** lesdits registres (lA et 1B, 2A et 2B, 3A et 3B, et 4A et 4B) sont dimensionnés de manière à contenir toutes les éléments de données relatifs auxdits signaux vidéo numériques d'une rangée moins 4.

14. Système selon la revendication 12 ou la revendication 13, **caractérisé en ce qu'**il comprend au moins deux séquences de registres mutuellement équivalents (1A - 4A et 1B - 4B) avec une unité de commande associée (9) configurée pour piloter lesdites au moins deux séquences de registres équivalents de manière à permettre, simultanément et en séquence alternée, le chargement de signaux vidéo numériques en entrée sur une desdites séquences équivalentes (1A - 4A par rapport à 1B - 4B) et l'émission en sortie de signaux vidéo convertis à partir de l'autre séquence équivalente (1B - 4B par rapport à 1A - 4A).

15. Système selon l'une quelconque des revendications 12 à 14, **caractérisé en ce qu'**il comprend une unité de commande (9), qui pilote le fonctionnement dudit système de manière que le système émette des signaux vidéo numériques convertis en sortie même avant d'avoir fini de mémoriser les signaux vidéo numériques arrivant sur son entrée pour la conversion.

16. Système selon la revendication 10 et l'une quelconque des revendications 12 à 15, **caractérisé en ce que** ledit au moins un élément convertisseur (3) a un circuit codeur associé (3') pour soumettre lesdits signaux vidéo numériques dans ledit format codé à une opération de codage additionnelle pour réduire l'activité de commutation sur ledit bus (B).

17. Système selon la revendication 11 et l'une quelconque des revendications 12 à 15, **caractérisé en ce que** ledit au moins un élément convertisseur (4) a un circuit décodeur associé (4') adapté pour recevoir des signaux vidéo numériques soumis à une opération de codage additionnelle, pour réduire l'activité de commutation sur ledit bus (B) en entrée, et générer lesdits signaux vidéo numériques dans ledit format codé en sortie.

18. Système selon l'une quelconque des revendications 8 à 17, **caractérisé en ce qu'**il comprend une mémoire tampon d'une dimension choisie parmi une rangée complète de signaux et une dimension différente de la dimension de la rangée, le fonctionnement du système étant ainsi indépendant du nombre de pixels utilisés.

19. Système selon la revendication 18, **caractérisé en ce que** ladite dimension est comprise dans le groupe composé de : 4 pixels, une demi-rangée, une rangée, une rangée et demie et deux rangées.
